# FASCICULE DE BREVET EUROPEEN

(11) **EP 1 692 564 B1**
(45) Date de publication et mention de la délivrance du brevet: **27.05.2015**
(21) Numéro de dépôt: 04805379.7
(22) Date de dépôt: 04.11.2004
(51) Int. Cl.: G02C 13/00

(54) **DISPOSITIF ET PROCEDE DE DETECTION AUTOMATIQUE DE DIVERSES CARACTERISTIQUES D'UNE LENTILLE OPHTALMIQUE**
EINRICHTUNG UND VERFAHREN ZUM AUTOMATISCHEN ERKENNEN VERSCHIEDENER EIGENSCHAFTEN EINER BRILLENLINSE
DEVICE AND METHOD FOR AUTOMATIC DETECTION OF VARIOUS CHARACTERISTICS OF AN OPHTHALMIC LENS

(30) Priorité: 10.12.2003 FR 0314467
(43) Date de publication de la demande: 23.08.2006
(73) Titulaire: ESSILOR INTERNATIONAL COMPAGNIE GENERALE D'OPTIQUE, 94227 Charenton Cédex (FR)
(72) Inventeur: DIVO, Fabien, F-94227 Charenton (FR)
(74) Mandataire: Chauvin, Vincent
(86) Numéro de dépôt international: PCT/FR2004/002828
(87) Numéro de publication internationale: WO 2005/066693

(56) Documents cités:
- EP-A- 0 363 281
- FR-A- 2 799 545
- US-A- 5 428 448
- US-A- 5 855 074
- US-A- 5 973 772
- US-A1- 2002 085 196

## Description

La présente invention concerne de manière générale la détection de caractéristiques d'une lentille ophtalmique.

Elle concerne plus particulièrement un dispositif de détection comportant un support adapté à recevoir ladite lentille. Elle concerne également un procédé de détection automatique de diverses caractéristiques d'une lentille ophtalmique pourvue de repères à l'aide d'un tel dispositif.

L'invention trouve une application particulièrement avantageuse notamment dans la vérification d'au moins une caractéristique de repérage, telle qu'une caractéristique de centrage, d'axage, de localisation des points de référence pour la vision de loin et la vision de près, d'une telle lentille montée sur une monture.

Lors du montage d'une lentille progressive sur une monture, il est important pour le confort visuel du porteur de s'assurer du positionnement convenable de la lentille par rapport à l'oeil dont elle corrige un défaut de réfraction ou d'accommodation.

La lentille ophtalmique est centrée lorsque le centre de référence de la lentille prévu lors de la conception et le centre pupillaire de l'oeil sont alignés ou, autrement formulé, lorsque la ligne de regard passe par le centre de référence de la lentille. Le centrage résulte donc du rapprochement de deux données géométrico-optiques : la morphologie pupillaire du porteur et la position sur la lentille du centre de référence.

Lors de sa fabrication, toute lentille progressive est munie de repères provisoires sous la forme d'un marquage à la peinture et de repères permanents sous la forme de gravures. Les repères provisoires permettent un centrage commode de la lentille préalablement à son montage. Les repères permanents permettent d'identifier, sur la monture du patient, la nature de la lentille ophtalmique progressive, la valeur de l'addition ainsi que de vérifier ou rétablir, après effacement des repères provisoires, le repérage exact de ladite lentille. On comprend en effet que les repères provisoires seront effacés par l'opticien avant la remise des lunettes à son client et ils pourront, au besoin, être rétablis à partir des repères permanents gravés qui restent sur la lentille.

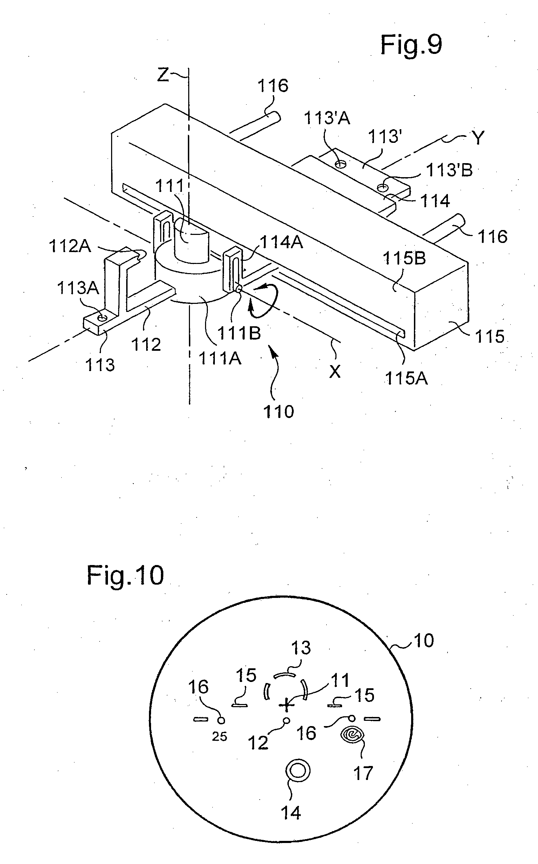

Plus précisément, comme le montre la figure 10, les repères provisoires comprennent habituellement :
- une croix 11 dite de montage ou centrage, matérialisant le centre de la zone de vision de loin destinée à être positionnée au centre de la pupille du porteur quand celui-ci regarde à l'infini droit devant lui ; elle permet de positionner en hauteur la progression de puissance de la lentille 10 par rapport à l'oeil, de telle sorte que le porteur trouve facilement, comme prévu par le concepteur de la lentille, la puissance correctrice dont il a besoin en vision de loin, en vision intermédiaire et en vision de près ;
- un point central 12 situé, selon les types de lentilles, de 2 à 6 mm au-dessous de la croix de montage 11 et qui localise le "centre optique" de la lentille 10 ; ce "centre optique" est conventionnellement, pour une lentille progressive, le point de « référence prisme » où est mesurée la puissance prismatique nominale de la lentille 10 correspondant à la prescription du porteur;
- un cercle 13 de mesure de la puissance de vision de loin de la lentille, situé dans la partie supérieure de la lentille 10, juste au-dessus de la croix de montage 11, et qui localise le point de référence pour la vision de loin ; il s'agit donc du lieu où un frontofocomètre devra être placé pour mesurer la puissance de vision de loin de la lentille 10;
- un cercle 14 de mesure de la puissance de vision de près de la lentille, situé dans la partie inférieure de la lentille 10 et qui entoure le centre ou point de référence de la zone de vision de près ; ce centre est décentré du côté nasal de 2 à 3 mm et la distance qui le sépare de la croix de montage 11 constitue la longueur nominale de la progression de la lentille 10 ;
- un ou plusieurs traits 15 repérant l'horizontale de la lentille 10 et qui seront utilisés pour le centrage.

Comme le montre également la figure 10, les repères permanents comprennent en général :
- deux petits cercles ou signes 16 localisés sur l'horizontale de la lentille 10 passant par le centre optique et situés systématiquement à 17 mm de part et d'autre du centre optique 12; ces gravures permettent de retrouver le centrage horizontal et vertical de la lentille ;
- un signe 17 permettant d'identifier la marque et la nature exacte de la lentille progressive (par exemple V pour Varilux®) qui est gravé sous le petit rond ou signe nasal ;
- un nombre à 2 ou 3 chiffres représentant la valeur de l'addition (par exemple 30 ou 300 pour une addition de 3,00 D) qui est gravé sous le petit rond ou signe temporal.

Pour mémoire, on se souviendra que, pour les lentilles à foyers multiples présentant une ou plusieurs lignes de discontinuité de puissance, ces lignes tiennent lieu de repères permanents.

Le centrage d'une lentille progressive comporte deux composantes : l'une verticale, l'autre horizontale.

Le centrage vertical permet de positionner en hauteur la progression de puissance de la lentille devant l'oeil, de telle manière que ce dernier puisse trouver facilement, comme prévu par le concepteur de la lentille, la puissance correctrice dont il a besoin. La puissance de la correction de vision de loin doit être atteinte sur l'axe de la position primaire du regard et la puissance de vision de près sur l'axe du regard lors de l'abaissement de celui-ci pour la vision de près.

Ce centrage vertical s'effectue classiquement au moyen de la croix de centrage de vision de loin peinte à cet effet sur la lentille par le fabricant : il consiste à positionner la croix de centrage de la lentille devant le centre de la pupille de l'oeil du patient regardant à l'infini. Dans la pratique, l'opticien mesure la hauteur entre le bas de la monture et le centre de la pupille du porteur regardant à l'horizontale et positionne la croix de centrage de la lentille à la hauteur mesurée.

Le centrage horizontal consiste à positionner latéralement la lentille progressive par rapport à l'oeil de manière à ce que le porteur puisse en utiliser de manière optimale les zones de vision de loin, de vision intermédiaire et de vision de près.

Les études physiologiques ont fait ressortir que les centres pupillaires présentent, dans 25% des cas, une dissymétrie horizontale de plus de 1 mm par rapport au nez et, dans 60% des cas, un écart vertical de plus de 1 mm. Il est donc avantageux de pouvoir vérifier le centrage de chacune des deux lentilles indépendamment de l'autre et c'est pourquoi il est préférable de pouvoir mesurer les demi-écarts interpupillaires droit et gauche plutôt que seulement l'écart interpupillaire global.

Toutes les lentilles progressives possèdent, de construction, un positionnement relatif des zones de vision de loin et de vision de près, avec un décentrement nasal de la zone de vision de près par rapport à la zone de vision de loin.

Le centrage horizontal de la lentille peut donc s'effectuer, soit par rapport à la vision de près, soit par rapport à la vision de loin (cas le plus usuel).

Le centrage par rapport à la vision de loin consiste à mesurer les demi-écarts interpupillaires droit et gauche du patient regardant en vision de loin, c'est-à-dire les distances qui séparent la racine du nez du centre des pupilles (ou plus précisément des reflets cornéens) de l'oeil droit et de l'oeil gauche. Les croix de montage de vision de loin de la lentille de droite et de la lentille de gauche sont alors positionnées à ces distances du plan médian ou nasal de la monture.

La lentille étant convenablement orientée autour dé son axe optique ou central, avec les traits horizontaux (ou les cercles gravés) alignés suivant l'horizontale de la monture, la zone de vision de près se trouve, par la construction de la lentille, convenablement décentrée du côté nasal de 2 à 3 mm par rapport à la vision de loin.

Le centrage par rapport à la vision de près, plus rarement réalisé, s'effectue de la manière analogue par la mesure des demi-écarts interpupillaires du patient regardant en vision de près et par le positionnement du centre dé la zone de vision de près des lentilles de gauche et de droite à ces distances.

Cette seconde méthode présente un intérêt particulier en cas de convergences dissymétriques entre l'oeil droit et l'oeil gauche.

On connaît déjà différents appareils, qui fonctionnent soit automatiquement (voir le document FR2799545), soit manuellement, pour détecter les diverses caractéristiques d'une lentille ophtalmique progressive montée sur une monture.

Le frontofocomètre est l'appareil optique qui permet de déterminer automatiquement et directement les puissances optiques frontales (sphérique, cylindrique, prismatique) d'une lentille ophtalmique par le repérage des focales de la lentille à mesurer, et de localiser le centre optique d'une lentille unifocale.

La plupart des frontofocomètres fonctionnent à partir du même principe optique, tel que décrit dans le document « Paraxial Optics » de W.F. Long, dans Visual Optics and Instrumentation, Ed. N. Charman, Macmillan Press, London 1991, pages 4188419.

Les frontofocomètres déjà connus peuvent être équipés d'un système de marquage et de maintien de la lentille non montée (avec doigts d'appui ou pince à lentille) du type de ceux qui sont commercialisés sous la marque Essilor ACL 60 par la société Visionix ou sous la marque Essilor CLE 60 par la société japonaiseShin Nippon.

Le tensiscope est un appareil, actuellement entièrement manuel, qui permet à l'opticien de détecter et de localiser les tensions existantes dans les lentilles ophtalmiques montées pour vérifier que chaque lentille ophtalmique est correctement montée sur la monture.

Les tensions dans une lentille ophtalmique montée sont dues à un mauvais usinage de la lentille qui est trop grande par rapport au cercle de la monture qui la reçoit. La lentille est alors contrainte dans la monture ce qui génère des tensions pouvant la détériorer.

Le principe utilisé dans le tensiscope consiste à mettre en évidence la biréfringence de la lentille (l'indice de la lentille n'est plus isotrope, mais dépend de la direction de polarisation de la lumière), cette biréfringence étant liée aux contraintes subies par ladite lentille.

Pour mettre en évidence cette biréfringence, le tensiscope comporte, d'une part, une source de lumière homogène, polarisée linéairement à l'aide d'un polariseur disposé juste après la source de lumière, qui éclaire la lentille ophtalmique montée, et, d'autre part, un second polariseur disposé après la lentille au travers duquel l'opticien regarde la lentille ophtalmique éclairée.

En cas d'absence de tensions, la lentille ophtalmique éclairée apparaît homogène à l'opticien.

En cas de tensions, l'opticien voit apparaître des franges colorées ou nuancées dans ladite lentille ophtalmique éclairée, les franges étant d'autant plus serrées à un endroit que la lentille est contrainte à cet endroit.

Au vue des franges colorées ou nuancées observées, l'opticien doit alors évaluer la valeur de la reprise à effectuer sur ladite lentille pour que son montage sur la monture soit correct, c'est-à-dire sans contrainte.

L'appareil d'identification d'une lentille à addition progressive de puissance appelé couramment « Pal Id » (Progressive addition lens Identifcation) est un appareil qui permet de localiser les repères permanents d'une lentille ophtalmique progressive en matière synthétique.

Cet appareil éclaire la lentille ophtalmique au travers d'un filtre à motifs pour faire apparaître les repères permanents sur ladite lentille.

L'inconvénient majeur de ces appareils précités, distincts les uns des autres, est qu'ils sont à eux tous très encombrants.

En outre, le tensiscope et le Pal Id fonctionnent entièrement manuellement, ce qui rend leur utilisation fastidieuse par l'opticien.

Par rapport à l'état de la technique précité l'invention propose un dispositif qui permet avec les mêmes moyens d'acquisition de réaliser automatiquement, non seulement l'identification des repères permanents d'une lentille ophtalmique, mais également de mesurer une ou plusieurs autres caractéristiques de la lentille, notamment de mesurer les tensions de la lentille induite par son montage sur une monture, de déterminer directement la puissance optique frontale de la lentille.

Plus particulièrement, l'invention propose un dispositif de détection automatique tel que défini dans la revendication 1.

D'autres caractéristiques non limitatives et avantageuses du dispositif selon l'invention sont définies dans les revendications 2 à 12.

L'invention propose également un procédé de détection automatique de diverses caractéristiques d'une lentille ophtalmique tel que défini dans la revendication 13.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est vue schématique en perspective du dispositif selon l'invention avec son support de lentille dans une première position ;
- la figure 2 est vue schématique en perspective du dispositif selon l'invention avec son support de lentille dans une deuxième position ;
- la figure 3 est une vue schématique de côté montrant les principaux composants internes du dispositif de la figure 1 fonctionnant en mode tensiscope ;
- les figures 4A et 4B sont des vues schématiques de dessus de deux filtres à motifs différents pour le dispositif selon l'invention ;
- la figure 5 est une vue schématique de côté montrant les principaux composants internes du dispositif de la figure 1 fonctionnant en mode Pal Id pour les lentilles ophtalmiques en matière synthétique;
- la figure 6 est une vue schématique de côté montrant les principaux composants internes du dispositif de la figure 1 fonctionnant en mode Pal Id pour les lentilles ophtalmiques en matière minérale ;
- la figure 7 est une vue schématique de dessus d'un mode de réalisation du support du dispositif de la figure 1 positionné dans la deuxième position ;
- la figure 8 est une vue schématique de dessus d'un mode de réalisation du support du dispositif de la figure 1 positionné dans la première position ;
- la figure 9 est une vue schématique en perspective du support du dispositif de la figure 1 ; et
- la figure 10 est une vue schématique de dessus d'une lentille ophtalmique à addition progressive de puissance pourvue de ses repères provisoires et permanents.

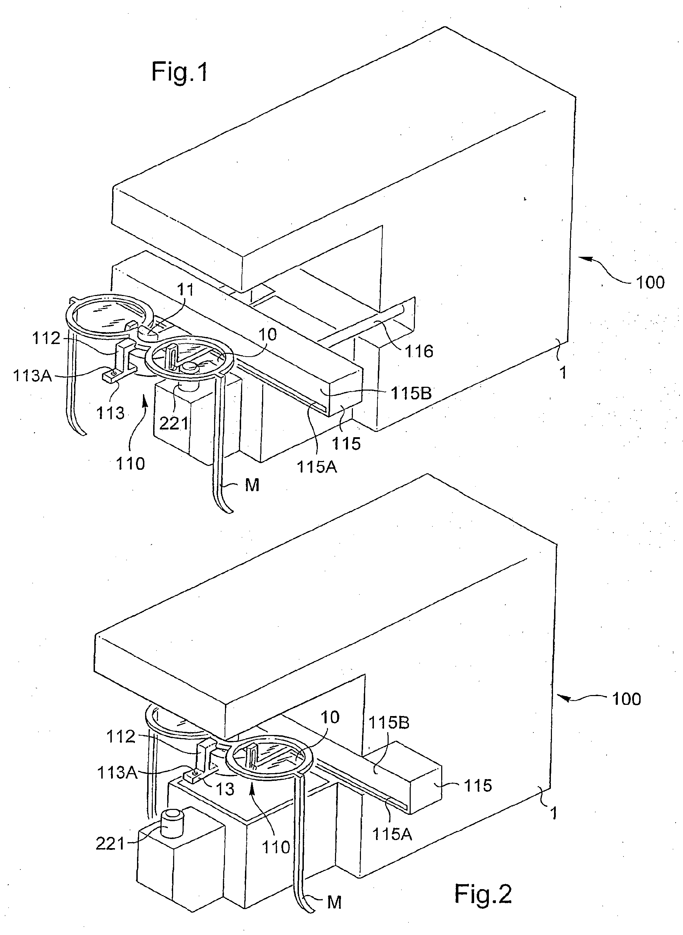

Sur les figures 1 et 2 on a représenté un dispositif 100 permettant de détecter automatiquement diverses caractéristiques d'une lentille ophtalmique 10 pourvue de repères.

Avantageusement, ce dispositif 100 intègre au moins trois fonctions différentes à savoir la fonction « Pal Id », la fonction tensiscope et la fonction frontofocomètre.

Ainsi, en mode « Pal Id », il permet de vérifier automatiquement au moins une caractéristique de centrage d'une lentille ophtalmique à addition progressive de puissance (en matière synthétique ou minérale) montée sur la monture d'un patient en déterminant la position des repères permanents de ladite lentille.

En mode tensiscope, il permet de détecter et de localiser automatiquement les tensions existantes dans les lentilles ophtalmiques montées pour vérifier que chaque lentille ophtalmique est correctement montée sur la monture.

En mode frontofocomètre, il permet de mesurer ou de vérifier la puissance en un point de référence d'une lentille ophtalmique à addition progressive de puissance ou de repérer et de mesurer les puissances d'une lentille ophtalmique unifocale.

Le dispositif 100 comporte un bâti 1, formant boîtier contenant différents éléments optiques, sur lequel est monté un support 110 adapté à recevoir une monture de lunettes pourvue de lentilles ophtalmique 10.

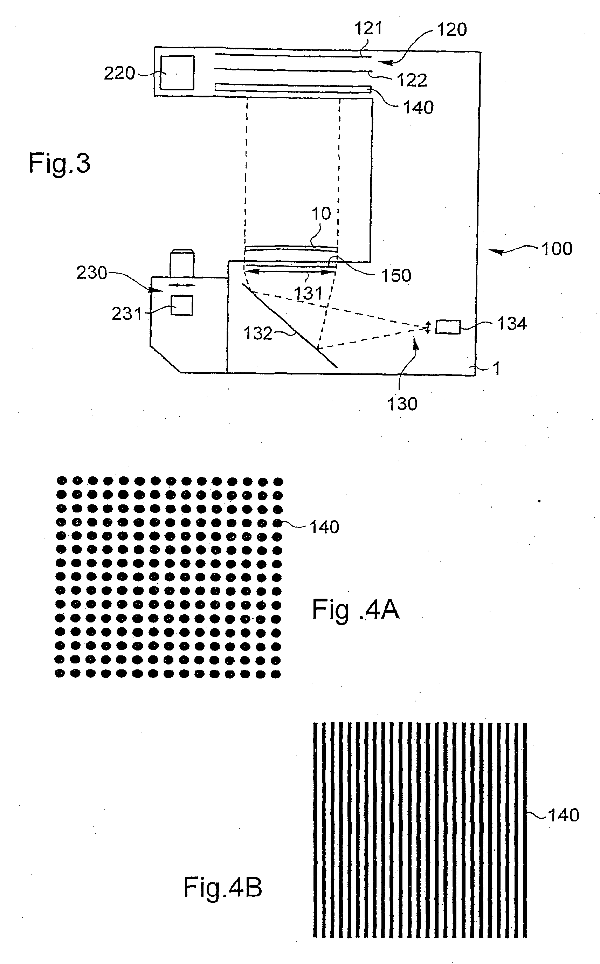

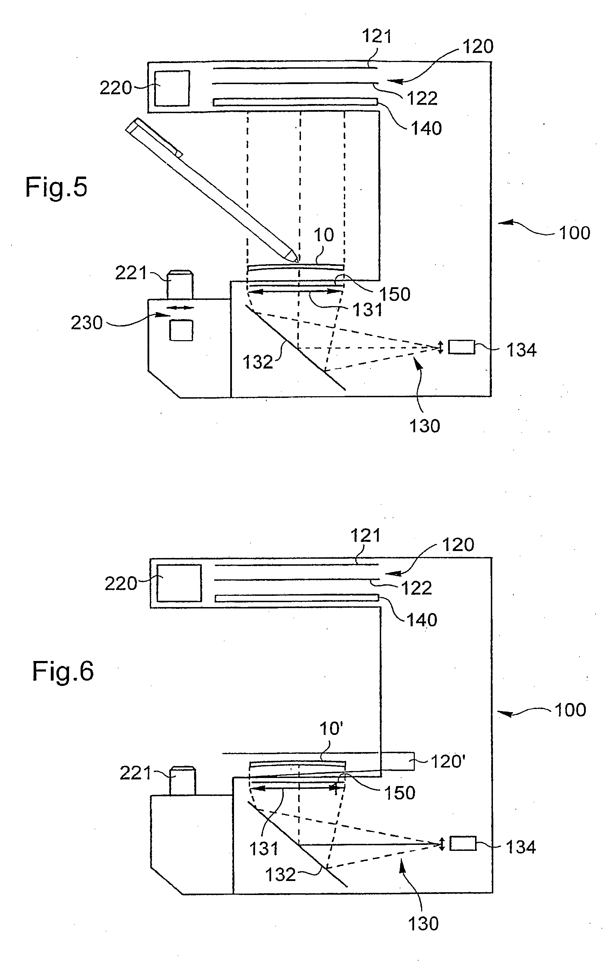

Comme le montrent les figures 3 et 5, le dispositif 100 comporte de part et d'autre du support 110, d'une part, des premiers moyens d'éclairement 120 de la lentille ophtalmique 10 installée sur le support 110 et, d'autre part, des premiers moyens d'acquisition et d'analyse 130 de la lumière transmise par ladite lentille 10.

Préférentiellement, lesdits premiers moyens d'éclairement 120 sont activables et désactivables.

Ils comprennent une source de lumière blanche 121 et un diffuseur 122 pour éclairer la lentille ophtalmique 10 avec une lumière diffuse.

Les premiers moyens d'acquisition et d'analyse 130 comprennent ici une caméra numérique 134. Ils comprennent en outre, entre un filtre polarisant aval 150 et la caméra numérique 134, un système optique de renvoi de faisceaux lumineux comprenant une lentille convergente 131 et un miroir 132 incliné à 45°. Lesdits premiers moyens d'acquisition et d'analyse 130 comprennent également des moyens de traitement d'image (non représentés) adaptés à traiter le signal obtenu en sortie de la caméra 134 et des moyens d'affichage (non représentés) du signal traité.

Comme le montrent les figures 5 et 6, pour exercer la fonction « Pal Id » sur des lentilles ophtalmiques en matière synthétique, le dispositif 100 comporte, entre lesdits premiers moyens d'éclairement 120 et ledit support 110, un filtre à motifs 140 répétés et réguliers activable et désactivable.

Ce filtre à motifs 140 est avantageusement formé par un écran à cristaux liquides (LCD).

Les figures 4A et 4B montrent deux filtres à motifs 140 différents activés, l'un comportant une trame de points noirs sur fond transparent, l'autre une trame de rayures noires sur fond transparent.

Le dispositif 100 comprend également deux filtres polarisants, à savoir un filtre polarisant amont disposé entre lesdits premiers moyens d'éclairement 120 et ledit support 110, et un filtre polarisant aval 150 disposé entre ledit support 110 et lesdits premiers moyens d'acquisition et d'analyse 130.

Ces deux filtres polarisants associés aux premiers moyens d'éclairement 120 et aux premiers moyens d'acquisition et d'analyse 130 permettent au dispositif 100 d'exercer la fonction tensiscope (voir figure 3). La polarisation des deux filtres est ménagée suivant une direction commune (et non pas selon deux directions perpendiculaires comme dans un tensiscope classique à filtres polariseurs croisés), de façon à permettre la mise en oeuvre des autres fonctions et en particulier de la fonction « Pal Id » sans blocage de la lumière par les deux filtres. On comprend en effet qu'une combinaison de filtres croisés bloquerait la lumière dans les zones de la lentilles dépourvues de tensions, ce qui s'opposerait à tout autre repérage ou mesure sur celle-ci. De plus, cette direction commune de polarisation des deux filtres doit être sensiblement identique à la direction de polarisation de la lentille à analyser. A défaut, les zones non tendues de la lentille « bloqueraient » la lumière en combinaison avec les deux filtres, ce qui s'opposerait à nouveau à toute identification ou mesure sur cette lentille. En pratique la polarisation sera donc, généralement, horizontale par référence à la configuration d'utilisation de la lentille.

Lorsqu'il est activé, le filtre à motifs 140 sert à faire apparaître les repères permanents de la lentille ophtalmique 10 en matière synthétique placée sur ledit support 110, interposée entre lesdits premiers moyens d'éclairement 120 et lesdits premiers moyens d'acquisition et d'analyse (fonction « Pal Id »). Lorsqu'il est désactivé, l'écran à cristaux liquides formant le filtre à motifs 140 permet d'effectuer une autre mesure sur ladite lentille ophtalmique 10 puisqu'il forme également le filtre polarisant amont disposé entre lesdits premiers moyens d'éclairement et la lentille (fonction tensiscope).

Comme le montre la figure 6, le dispositif 100 comprend par ailleurs des deuxièmes moyens d'éclairement 120' activables et désactivables, adaptés à éclairer en lumière rasante une lentille ophtalmique 10' en matière minérale installée sur ledit support 110, lesdits premiers moyens d'acquisition et d'analyse 130 étant aptes à analyser le faisceau lumineux transmis par ladite lentille 10' éclairée en lumière rasante. Ces deuxièmes moyens d'éclairement 120' permettent de faire apparaître les repères permanents sur des lentilles ophtalmiques en matière minérale (fonction « Pal Id »). Bien entendu pour ce fonctionnement, les premiers moyens d'éclairement 120 doivent être désactivés au profit des deuxièmes moyens d'éclairement 120'.

Comme le montrent plus particulièrement les figures 3 et 5, pour exercer la fonction frontofocomètre, le dispositif 100 comprend des moyens de mesure de puissance adaptés à mesurer en un point de référence la puissance de la lentille ophtalmique 10. Dans l'exemple proposé, ces moyens de mesure de puissance comprennent des troisièmes moyens d'éclairement 220 disposés latéralement par rapport auxdits premiers moyens d'éclairement 120, et adaptés à élaborer un faisceau lumineux dirigé sur une lentille ophtalmique installée sur ledit support 110 positionné en regard desdits troisièmes moyens d'éclairement 220. Il comprend également en aval d'un embout frontofocomètre 221 incluant un masque d'Hartmann, des deuxièmes moyens d'acquisition et d'analyse 230 du faisceau lumineux transmis par ladite lentille installée sur ledit support 110 en regard dudit embout frontofocomètre 221. Ces deuxièmes moyens d'acquisition et d'analyse 230 comprennent une caméra 231.

Comme le montrent les figures 1 et 2, le support 110 est plus particulièrement adapté à supporter une monture de lunettes M d'un patient.

Il comporte à cet effet un nez 111 et une mâchoire de serrage 112 aptes à serrer la monture de lunettes M (voir figure 9).

Le nez 111 est un demi-cylindre qui s'élève à partir d'un pied 111A cylindrique. La mâchoire de serrage 112 est rattachée au pied 111A cylindrique, elle comporte une partie en forme de L inversé dont une extrémité libre comprend une encoche 112A faisant face au nez 111.

Ainsi, le nez de la monture M repose sur le pied 111A cylindrique et est serré entre ladite encoche 112A de la mâchoire de serrage 112 et ledit nez 111.

Avantageusement, la mâchoire de serrage 112 est déplaçable en translation par rapport audit nez 111 tout en étant en permanence rappelée dans une position initiale par rapport à ce dernier par un moyen élastique de rappel (un ressort non représenté) de manière à garantir un serrage correct du nez de la monture M et donc le maintien en position fixe de ladite monture M sur ledit support 110.

Plus particulièrement, la mâchoire de serrage 112 comporte une tirette qui coulisse dans une rainure (non représentée) du pied 111A cylindrique qui contient le ressort de rappel en position de ladite mâchoire.

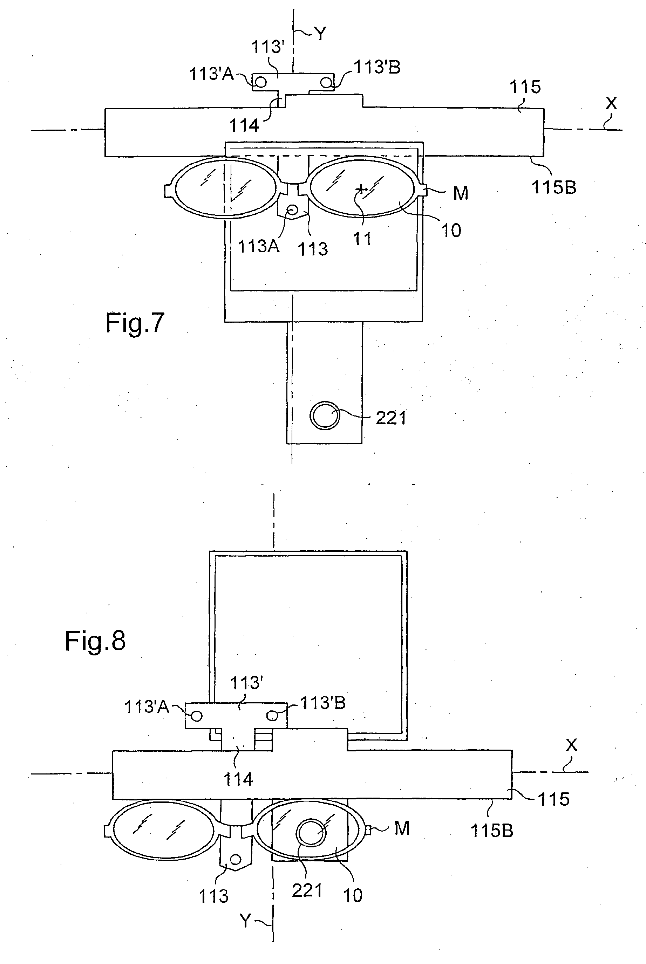

Avantageusement, le support 110 est déplaçable en translation dans un plan, suivant deux axes X, Y perpendiculairement entre eux pour prendre différentes positions de mesure des caractéristiques de la lentille ophtalmique 10 correspondant aux différents modes de fonctionnement du dispositif 100 comme cela sera expliqué plus en détail ultérieurement (voir figures 7 et 8).

Pour ce faire, le nez 111 du support 110 est rattaché à une partie de coulissement 114 apte à coulisser dans une rainure 115A d'une réglette 115 s'étendant suivant l'axe X et la réglette 115 porte des tiges 116 qui s'étendent suivant l'axe Y et qui sont destinées à coulisser dans des conduits correspondants (non représentés) du bâti 1.

Avantageusement, ledit nez 111 rattaché à ladite partie de coulissement 114 par l'intermédiaire du pied 111A cylindrique est apte à être déplacé en translation suivant l'axe Y par rapport à ladite réglette 115 tout en étant en permanence rappelé dans une position initiale par rapport à ladite réglette 115 par un moyen élastique de rappel (ici un ressort non représenté). Cela permet de mettre en contact le bord inférieur de la monture M et le bord correspondant 115B de la réglette 115.

Préférentiellement, ledit support 110 est déplaçable suivant un troisième axe Z perpendiculaire aux deux premiers axes X, Y de déplacement. Cela permet, en mode frontofocomètre, de soulever le support 110 et donc la monture M pour placer l'une des lentilles ophtalmiques 10 puis l'autre dans la position de mesure adéquate sans venir heurter l'embout frontofocomètre 221. En outre, le nez 111 du support 110 est monté à pivotement sur ladite partie de coulissement 114. Comme le montre plus particulièrement la figure 9, le pied 111A cylindrique porte en saillie deux tétons 111 B alignés formant l'axe de pivotement X. Ces tétons 111 B sont montés dans des rainures formées dans deux oreilles 114A prévues en bout de ladite partie de coulissement 114. Ce pivotement du nez 111 du support 110 permet, en mode frontofocomètre, de placer correctement la lentille ophtalmique 10 correspondant par rapport à l'embout frontofocomètre 221.

Afin que le dispositif 100 puisse repérer la position du support 110 dans un référentiel fixe (représenté par le bâti 1), celui-ci peut comporter, selon un premier mode de réalisation, des moyens de mesure (non représentés) de son déplacement par rapport à une position initiale. Ces moyens de mesure comprennent des encodeurs incrémentaux tels que par exemple les encodeurs incrémentaux fabriqués (sous la référence RE20F-100-200) par la société COPAL ELECTRONICS.

Selon un mode de réalisation préférentiel, ledit support 110 comporte au moins un pointeur passif 113 ; 113' qui, lorsqu'il est éclairé par lesdits premiers moyens d'éclairement 120, forme, en ombre, une image de repérage sur lesdits premiers moyens d'acquisition et d'analyse 130 permettant de déterminer la position dudit support 110 dans le référentiel fixe.

Comme le montrent les figures 7 et 8, ledit support 110 étant mobile entre plusieurs positions de mesure des caractéristiques de ladite lentille, il comporte plusieurs pointeurs passifs 113,113' agencés de telle façon que l'un au moins de ces pointeurs passifs 113,113' est éclairé par lesdits premiers moyens d'éclairement 120 et forme, en ombre, une image de repérage sur lesdits premiers moyens d'acquisition et d'analyse 130, qu'elle que soit la position de mesure prise par ledit support 110.

Chaque pointeur passif 113,113' présente une ligne de contour externe ou interne 113A, 113A', 113B' polygonale, circulaire ou cruciforme.

Ici, le support 110 comporte, en avant de ladite mâchoire de serrage 112, un de ces pointeurs passifs formé par une languette 113 comportant une lumière 113A à contour polygonale, circulaire ou cruciforme.

Il comporte également en arrière de ladite réglette 115, à l'extrémité de ladite partie de coulissement 114, un autre de ces pointeurs passifs constitué par une languette 113' pourvue de deux lumières 113'A,113'B à contour polygonale, circulaire ou cruciforme.

Ainsi, lorsque le dispositif 100 fonctionne en mode frontofocomètre sur une lentille ophtalmique 10 à addition de puissance progressive ou sur une lentille multifocale à discontinuité de puissance, il met en oeuvre un procédé pour la vérification de la puissance en un point de référence de ladite lentille, comprenant les étapes suivantes :
a) on positionne ladite lentille ophtalmique 10 sur ledit support 110,
b) on déplace ledit support 110 pour placer la lentille ophtalmique 10 en regard des premiers moyens d'éclairement 120 (voir figure 2),
c) on éclaire la lentille ophtalmique 10 à l'aide desdits premiers moyens d'éclairement 120 alors que le filtre à motifs est activé,
d) on recueille par la caméra numérique 134 desdits premiers moyens d'acquisition et d'analyse 130 la lumière transmise par la lentille ophtalmique 10,
e) on traite le signal sortant de ladite caméra numérique 134 pour déterminer la position des repères permanents 16 de la lentille ophtalmique 10 (voir figure 10) dans un référentiel fixe,
f) on mémorise cette position en tant que position initiale de ladite lentille ophtalmique 10,
g) on calcule (avec les encodeurs incrémentaux) le déplacement de ladite lentille ophtalmique 10 par rapport à ladite position initiale pour placer ledit point de référence en regard desdits moyens de mesure de puissance 220,230 (voir figure 1),
h) on déplace ledit support 110 conformément au déplacement calculé, et
i) on effectue la mesure de puissance audit point de référence.

Lorsque le dispositif 100 fonctionne en mode « Pal Id », son filtre à motifs 140 est activé. Il peut alors mettre en oeuvre un procédé pour la vérification d'au moins une caractéristique de centrage d'une lentille ophtalmique 10 à addition de puissance progressive, comprenant les étapes suivantes :
a) on acquiert une position initiale du support 110 dans un référentiel fixe,
b) on positionne la lentille ophtalmique 10 sur le support 110,
c) on déplace le support 110 pour placer la lentille ophtalmique 10 en regard desdits premiers moyens d'éclairement 120 (voir figure 2),
d) on mesure (avec les encodeurs incrémentaux) le déplacement du support 110 par rapport à sa position initiale,
e) on éclaire la lentille ophtalmique 10 à l'aide desdits premiers moyens d'éclairement 120,
f) on recueille par ladite caméra numérique 134 desdits premiers moyens d'acquisition et d'analyse 130 la lumière transmise par la lentille ophtalmique 10,
g) on traite le signal sortant de ladite caméra numérique 134 pour déterminer la position des repères permanents 16 de la lentille ophtalmique 10 dans ledit référentiel fixe, et
h) on déduit de la position initiale dudit support, du déplacement mesuré de celui-ci et de la position des repères permanents de ladite lentille ophtalmique 10, la valeur de ladite caractéristique de centrage.

Les caractéristiques de centrage sont classiquement le demi-écart interpupillaire et la hauteur de montage de la lentille ophtalmique 10 montée sur sa monture M.

Selon le procédé précité, la position du support 110 est déduite d'une position initiale déterminée lors de l'étape a) préliminaire d'initialisation et d'un déplacement mesuré du support 110 pour placer le lentille ophtalmique en regard des moyens d'éclairement 120 (étapes b) à d)).

Le dispositif 100 peut toutefois mettre en oeuvre un autre procédé de vérification d'au moins une caractéristique de centrage dans lequel on acquière par la caméra numérique 134 la position du support 110 à l'aide d'un de ces pointeurs passifs 113,113'.

Ce procédé comprend les étapes suivantes :
a) on positionne la lentille ophtalmique 10 sur le support 110 placé en regard du filtre à motifs 140 activé,
b) on éclaire au travers dudit filtre à motifs 140 la lentille ophtalmique 10 à l'aide d'une source de lumière diffuse 121,122,
c) on recueille par la caméra numérique 134 des premiers moyens d'acquisition et d'analyse 130 la lumière transmise par la lentille ophtalmique 10,
d) on traite le signal sortant de la caméra numérique 134 pour déterminer la position des repères permanents de la lentille ophtalmique 10 dans un référentiel fixe,
e) on détermine la position du support 110 dans le référentiel fixe,
f) on déduit de la position connue du support 110 et de la position des repères permanents de la lentille ophtalmique 10, la valeur de ladite caractéristique de centrage.

Avantageusement selon ce procédé, lors de l'étape e) on réalise simultanément l'étape f) où l'on recueille par la caméra au moins une image de repérage formée, en ombre, par un pointeur passif 113 prévu sur le support 110 (voir figure 7).

Plus précisément, à l'étape b) on éclaire ledit support 110 à l'aide de ladite source de lumière diffuse 121,122 desdits premiers moyens d'éclairement 120, à l'étape c) on recueille par ladite caméra numérique 134 la lumière transmise au travers dudit support 110 et à l'étape f) on traite le signal sortant de la caméra numérique 134 pour déterminer la position du pointeur passif 113A dans le référentiel fixe.

Bien entendu en variante, on peut prévoir qu'à l'étape e) on recueille un signal émis directement par le support 110 au niveau de la marque fixe 113A.

Ainsi selon ce procédé, comme le montre la figure 7, à l'étape f) on détermine le demi-écart interpupillaire en calculant la distance existant entre la position du milieu du nez de ladite monture M donnée par un des pointeurs passifs 113 dudit support 110 et la position du point central 12 de ladite lentille ophtalmique 10 situé au milieu du segment de droite reliant les deux repères permanents 16 correspondants de ladite lentille ophtalmique 10.

Selon ce procédé également , à l'étape f) on détermine la hauteur en calculant la distance existant entre la position du bord supérieur ou inférieur de ladite monture M (matérialisé par le bord 115A de la réglette 115 visualisé par la caméra numérique 134) et la position du point central 12 de ladite lentille ophtalmique 10 situé au milieu du segment de droite reliant les deux repères permanents 16 correspondants de ladite lentille ophtalmique 10 (voir figures 7 et 10).

Plus généralement le dispositif 100 peut mettre en oeuvre un procédé de détection automatique de diverses caractéristiques d'une lentille ophtalmique 10 pourvue de repères, qui comporte les étapes suivantes :
- la lentille ophtalmique 10 étant placée sur ledit support 110, on déplace le support 110 pour positionner ladite lentille dans une position de mesure,
- on éclaire à l'aide desdits premiers moyens d'éclairement ladite lentille et au moins au moins un pointeur passif dudit support 110 le filtre à motifs étant activé,
- on recueille par lesdits moyens d'acquisition et d'analyse 130 un fichier numérique représentatif de l'image de la lentille 10,
- on désactive le filtre à motifs,
- on recueille par lesdits moyens d'acquisition et d'analyse 130 un fichier numérique représentatif de l'image de repérage formée, en ombre, par ledit pointeur passif,
- on traite les fichiers numériques recueillis, et
- on en déduit la position dudit support 110 et celle des repères de la lentille dans un référentiel fixe.

L'algorithme qui permet d'obtenir la position du support à partir de l'image capturée fonctionne de la manière suivante :
- on effectue une binarisation de l'image de repérage et on conserve uniquement les points d'intensité lumineuse supérieure à un seuil prédéfini,
- on effectue une opération de segmentation : on isole et numérote les différents objets obtenus par la binarisation (un objet est un amas de pixels contigus),
- on détermine les caractéristiques (taille, position du barycentre) des différents objets,
- on trie les objets en fonction de leur taille: on supprime les objets de taille largement plus grande et largement plus petite que la taille du ou des pointeurs passifs,
- on compare les objets restants à la forme théorique du ou des pointeurs passifs en effectuant une corrélation entre les objets conservés et un masque représentatif du ou des pointeurs passifs. La corrélation est une opération bien connue en traitement d'image qui consiste à multiplier le masque représentatif avec l'objet. La corrélation est maximale quand le masque et l'objet sont parfaitement identiques,
- on conserve les objets pour lesquels la corrélation est supérieure à un seuil prédéfini. Il ne reste normalement, à ce stade, plus que les objets correspondant au ou aux pointeurs passifs,
- on détermine la position du ou des pointeurs passif dans l'image à l'aide des barycentres des objets correspondant et précédemment calculée,
- on en déduit la position des pointeurs dans le référentiel fixe, car on connaît la transformation permettant de passer d'une position en pixel dans l'image à une position en millimètres dans le référentiel fixe, et
- on déduit de la position du ou des pointeurs passif la position du support.

La transformation permettant de passer d'une position en pixel dans l'image à une position en millimètres dans le référentiel fixe est définie lors de l'étalonnage du dispositif. On peut par exemple, pour déterminer cette transformation, utiliser une mire transparente positionnée sur le dispositif de détection sur laquelle une grille de pas connu est sérigraphiée. Cette mire est indexée par rapport à l'embout frontofocomètre, qui est l'origine du référentiel fixe. Chaque intersection de la grille correspond à un pixel bien déterminé et à une coordonnée bien déterminée dans le référentiel fixe. On a ainsi la transformation pixel/coordonnée dans référentiel fixe et on stocke cette transformation en mémoire.

Une fois que le dispositif 100 a localisé le pointeur passif 113 correspondant du support 110 et les repères permanents 16 de la lentille ophtalmique 10, il peut en déduire les valeurs des demi-écarts interpupillaire et de la hauteur de montage de la lentille ophtalmique montée sur la monture M.

Comme le montre la figure 5, l'opticien peut également utiliser le dispositif 100 pour simplement faire apparaître les repères permanents d'une lentille ophtalmique brute afin de marquer à l'aide d'un marqueur ces repères sur ladite lentille.

Lorsque le dispositif 100 fonctionne en mode tensiscope, le filtre à motifs 140 est désactivé et l'écran LCD forme alors un filtre polarisant.

L'opticien place à l'aide du support 110 la lentille ophtalmique montée sur sa monture M en regard desdits premiers moyens d'éclairement 120, et plus particulièrement entre les deux filtres polarisants amont 140 et aval 150. Il éclaire ladite lentille 10 et la caméra numérique 134 capture l'image de la lentille 10.

Ledit dispositif 100 peut donner alors une des trois informations suivantes :
- une information binaire indiquant que la lentille ophtalmique 10 est correctement montée sur sa monture M (c'est-à-dire sans contrainte) ;
- une information binaire indiquant que la lentille ophtalmique 10 est correctement montée sur sa monture M et dans le cas où la lentille est trop tendue, il indique à l'opticien la valeur de la reprise d'usinage à effectuer sur ladite lentille, et éventuellement la position angulaire de la reprise à effectuer lorsque celle-ci ne doit affecter qu'une portion de la périphérie de la lentille, pour que le montage de ladite lentille sur la monture M soit correct,
- il affiche l'image capturée de la lentille 10 sur un écran et l'opticien peut alors, à la vue de cette image, considéré si le montage est correct ou non, et le cas échéant décidé de la valeur de la reprise d'usinage à effectuer sur ladite lentille.

Enfin, avantageusement l'opticien peut utiliser le dispositif 100 décrit précédemment pour positionner et mesurer sur une lentille ophtalmique l'emplacement et éventuellement la forme des trous à effectuer pour monter les branches d'une monture sans cercle.

Il place sur le support 110 un gabarit de perçage et positionne ledit support 110 face auxdits premiers moyens d'éclairement 120. Il éclaire ce gabarit de perçage et obtient avec la caméra numérique 134 une image de celui-ci. Le dispositif 100 affiche alors sur un écran l'image obtenue de façon que l'opticien ait une simulation du montage à effectuer. Bien entendu les informations obtenues peuvent être envoyées à une perceuse non représentée qui effectue automatiquement les trous dans ladite lentille ophtalmique aux emplacements mesurés.

La présente invention n'est nullement limitée aux modes de réalisation décrits et représentés.

## Revendications

1. Dispositif (100) de détection automatique d'au moins une caractéristique de centrage telle que l'écart ou demi-écart interpupillaire d'une lentille ophtalmique (10) montée sur une monture, comportant un support (110) adapté à recevoir ladite monture ledit support (110) est déplaçable en translation suivant deux axes perpendiculaires entre eux **caractérisé en ce que** ledit support comporte un pointeur de repérage (113, 113') pour former sur des premiers moyens d'acquisition et d'analyse (130) une image de repérage de la position du support (110) et **en ce que** le dispositif comporte des moyens (130) pour traiter ladite image de repérage et en déduire la position du support (110) dans un référentiel fixe, des moyens (120, 140, 130 ; 220, 221) pour acquérir la position du point central optique (12) de la lentille dans le référentiel fixe et des moyens (130) pour déduire, de la position du point central optique (12) de la lentille et de la position du support (110), la caractéristique de centrage recherchée.

2. Dispositif (100) selon l'une des revendications précédentes, comportant de part et d'autre dudit support (110), d'une part, des premiers moyens d'éclairement (120) de la lentille ophtalmique (10) installée sur ledit support (110) et, d'autre part, lesdits premiers moyens d'acquisition et d'analyse (130), et dans lequel ledit support comporte au moins un pointeur passif (113,113') qui, lorsqu'il est éclairé par lesdits premiers moyens d'éclairement (120), forme, en ombre, une image de repérage sur lesdits premiers moyens d'acquisition et d'analyse (130).

3. Dispositif (100) selon l'une des revendications 1 et 2, dans lequel ledit support comporte un pointeur actif qui émet un signal reçu par lesdits premiers moyens d'acquisition et d'analyse (130).

4. Dispositif (100) selon l'une des revendications précédentes, dans lequel le pointeur présente une ligne de contour polygonale.

5. Dispositif (100) selon l'une des revendications 1 à 4, dans lequelle pointeur présente une ligne de contour circulaire.

6. Dispositif (100) selon l'une des revendications 1 à 4, dans lequel le pointeur présente une ligne de contour cruciforme.

7. Dispositif (100) selon l'une des revendications précédentes, dans lequelledit support (110) étant mobile entre plusieurs positions de mesure des caractéristiques de ladite lentille, il comporte plusieurs pointeurs passifs (113, 113') agencés de telle façon que, dans au moins une position de mesure prise par ledit support (110), l'un au moins de ces pointeurs passifs (113,113') forme une image de repérage sur lesdits premiers moyens d'acquisition et d'analyse (130).

8. Dispositif (100) selon l'une des revendications précédentes, dans lequel ledit support (110) est déplaçable suivant un troisième axe perpendiculaire aux deux premiers axes de déplacement.

9. Dispositif (100) selon l'une quelconque des revendications précédentes, dans lequel ledit support (110) comporte plusieurs éléments (111,112,114,115) aptes à prendre des positions relatives différentes les uns par rapport aux autres.

10. Dispositif (100) selon la revendication précédente, dans lequel ledit support (110) comporte un nez (111) et une mâchoire de serrage (112) aptes à serrer une monture de lunettes, ladite mâchoire de serrage (112) étant déplaçable en translation par rapport audit nez (111) tout en étant en permanence rappelée dans une position initiale par rapport à ce dernier par un moyen élastique de rappel.

11. Dispositif (100) selon la revendication précédente, dans lequel ledit nez (111) est monté sur une partie de coulissement (114) apte à coulisser dans une rainure (115A) d'une réglette (115), ledit nez (111) attaché à ladite partie de coulissement (114) étant apte à être déplacé en translation par rapport à ladite réglette (115) tout en étant en permanence rappelé dans une position initiale par rapport à cette dernière par un moyen élastique de rappel.

12. Dispositif (100) selon la revendication précédente, dans lequel ledit nez (111) est monté à pivotement sur ladite partie de coulissement (114).

13. Procédé de détection automatique de diverses caractéristiques d'une lentille ophtalmique (10) pourvue de repères, à l'aide du dispositif (100) selon l'une des revendications précédentes, **caractérisé en ce qu'**il comporte les étapes suivantes :
- la monture étant placée sur ledit support (110), on déplace le support (110) pour positionner la lentille dans une position de mesure,
- on éclaire à l'aide des premiers moyens d'éclairement ladite lentille,
- on recueille par lesdits moyens d'acquisition et d'analyse un fichier numérique représentatif de l'image de la lentille,
- on recueille par lesdits moyens d'acquisition et d'analyse un fichier numérique représentatif de l'image de repérage formée par ledit pointeur de repérage (113, 113'),
- on traite les fichiers numériques recueillis pour en déduir la position dudit support et celle des repères de la lentille dans un référentiel fixe.

## Patentansprüche

1. Vorrichtung (100) zum automatischen Erkennen mindestens einer Zentriereigenschaft, wie etwa des interpupillaren Abstands oder Halbabstands einer Brillenlinse (10), die in ein Gestell eingefasst ist, umfassend einen Halter (110), der geeignet ist, um das Gestell aufzunehmen, wobei der Halter (110) translationsmäßig entlang zwei zueinander rechtwinkligen Achsen verschiebbar ist, **dadurch gekennzeichnet, dass** der Halter einen Markierungszeiger (113, 113') umfasst, um auf ersten Erfassungs- und Analysemitteln (130) ein Bild zum Markieren der Position des Halters (110) zu bilden, und dass die Vorrichtung Mittel (130), um das Markierungsbild zu verarbeiten und daraus die Position des Halters (110) in einem festgelegten Bezugsrahmen abzuleiten, Mittel (120, 140, 130; 220, 221), um die Position des optischen Mittelpunkts (12) der Linse in dem festgelegten Bezugsrahmen zu erfassen, und Mittel (130), um von der Position des optischen Mittelpunkts (12) der Linse und der Position des Halters (110) die gesuchte Zentriereigenschaft abzuleiten, umfasst.

2. Vorrichtung (100) nach dem vorhergehenden Anspruch, umfassend auf beiden Seiten des Halters (110) einerseits erste Mittel (120) zum Beleuchten der Brillenlinse (10), die in dem Halter (110) installiert ist, und andererseits die ersten Erfassungs- und Analysemittel (130), und wobei der Halter mindestens einen passiven Zeiger (113, 113') umfasst, der, wenn er durch die ersten Beleuchtungsmittel (120) beleuchtet wird, als Schatten ein Markierungsbild auf den ersten Erfassungs- und Analysemitteln (130) bildet.

3. Vorrichtung (100) nach einem der Ansprüche 1 und 2, wobei der Halter einen aktiven Zeiger umfasst, der ein Signal abgibt, das von den ersten Erfassungs- und Analysemitteln (130) empfangen wird.

4. Vorrichtung (100) nach einem der vorhergehenden Ansprüche, wobei der Zeiger eine vieleckige Konturlinie aufweist.

5. Vorrichtung (100) nach einem der Ansprüche 1 bis 4, wobei der Zeiger eine kreisförmige Konturlinie aufweist.

6. Vorrichtung (100) nach einem der Ansprüche 1 bis 4, wobei der Zeiger eine kreuzförmige Konturlinie aufweist.

7. Vorrichtung (100) nach einem der vorhergehenden Ansprüche, wobei der Halter (110), der zwischen mehreren Messpositionen der Eigenschaften der Linse beweglich ist, mehrere passive Zeiger (113, 113') umfasst, die derart angeordnet sind, dass in mindestens einer Messposition, die von dem Halter (110) eingenommen wird, mindestens einer dieser passiven Zeiger (113, 113') ein Markierungsbild auf den ersten Erfassungs- und Analysemitteln (130) bildet.

8. Vorrichtung (100) nach einem der vorhergehenden Ansprüche, wobei der Halter (110) entlang einer dritten Achse verschiebbar ist, die zu den ersten beiden Verschiebungsachsen rechtwinklig steht.

9. Vorrichtung (100) nach einem der vorhergehenden Ansprüche, wobei der Halter (110) mehrere Elemente (111, 112, 114, 115) umfasst, die geeignet sind, um im Verhältnis zueinander unterschiedliche relative Positionen einzunehmen.

10. Vorrichtung (100) nach dem vorhergehenden Anspruch, wobei der Halter (110) eine Nase (111) und eine Klemmbacke (112) umfasst, die geeignet sind, um ein Brillengestell einzuklemmen, wobei die Klemmbacke (112) im Verhältnis zu der Nase (111) translationsmäßig verschiebbar ist und dabei im Verhältnis dazu durch ein elastisches Rückstellmittel ständig in eine Ausgangsposition zurückgestellt wird.

11. Vorrichtung (100) nach dem vorhergehenden Anspruch, wobei die Nase (111) auf einem Gleitteil (114) montiert ist, der in einer Nut (115A) einer Leiste (115) gleiten kann, wobei die Nase (111), die an dem Gleitteil (114) angebracht ist, in der Lage ist, im Verhältnis zu der Leiste (115) translationsmäßig verschoben zu werden und dabei im Verhältnis dazu durch ein elastisches Rückstellmittel ständig in eine Ausgangsposition zurückgestellt wird.

12. Vorrichtung (100) nach dem vorhergehenden Anspruch, wobei die Nase (111) schwenkbar auf dem Gleitteil (114) montiert ist.

13. Verfahren zum automatischen Erkennen diverser Eigenschaften einer Brillenlinse (10), die mit Markierungen versehen ist, anhand der Vorrichtung (100) nach einem der vorhergehenden Ansprüche, **dadurch gekennzeichnet, dass** es die folgenden Schritte umfasst:
- bei auf den Halter (110) gesetztem Gestell, Verschieben des Halters (110), um die Linse in eine Messposition zu positionieren,
- Beleuchten der Linse anhand der ersten Beleuchtungsmittel,
- Erheben einer digitalen Datei, die für das Bild der Linse repräsentativ ist, durch die Erfassungs-und Analysemittel,
- Erheben einer digitalen Datei, die für das Markierungsbild repräsentativ ist, das durch den Markierungszeiger (113, 113') gebildet wird, durch die Erfassungs- und Analysemittel,
- Verarbeiten der erhobenen digitalen Dateien, um daraus die Position des Halters und die der Markierungen der Linse in einem festgelegten Bezugsrahmen abzuleiten.

## Claims

1. A device (100) for automatically detecting at least one centering characteristic of an ophthalmic lens (10) fitted in a spectacle frame, such as an interpupillary distance or a semi-interpupillary distance, the device comprising a support (110) adapted to receive said spectacle frame, which support is displaceable in translation along two mutually perpendicular axes, **characterized in that** the support (110) includes a positioning pointer (113, 113') for forming a positioning image of the support (110) on first acquisition and analysis means (130), and **in that** the device (100) include means (130) for processing said positioning image and for deducing therefrom the position of said support (110) in a stationary frame of reference, means (120, 140, 130 ; 220, 221) for acquiring the position of the optical central point (12) of the lens in said stationary frame of reference, and means (130) for deducing the searched centering characteristic from the position of said support (110) and from the position of the optical central point (12).

2. A device (100) according to the preceding claim, including, on either side of said support (110), firstly first illumination means(120) for illuminating the ophthalmic lens (10) installed on said support (110), and secondly said first acquisition and analysis means (130), and wherein said support (110) includes at least one passive pointer (113, 113') which, when illuminated by said first illumination means (120) forms, in shadow, a positioning image on said first acquisition and analysis means (130).

3. A device (100) according to claim 1 or claim 2, wherein said support includes an active pointer that emits a signal received by said first acquisition and analysis means (130).

4. A device (100) according to any one of claims 1 to 3, wherein the pointer presents a polygonal contour line.

5. A device (100) according to any one of claims 1 to 4, wherein the pointer presents a circular contour line.

6. A device (100) according to any one of claims 1 to 4, wherein the pointer presents a cruciform contour line.

7. A device (100) according to any one of the preceding claims, wherein said support (110) being movable between a plurality of positions for measuring characteristics of said lens, the support (110) includes a plurality of passive pointers (113, 113') arranged in such a manner that at least one of the passive pointers (113, 113') forms a positioning image on said first acquisition and analysis means (130) when the support (110) is in at least in a measurement position.

8. A device (100) according to any one of the preceding claims, wherein said support (110) is displaceable along a third axis perpendicular to the first two displacement axes.

9. A device (100) according to any one of the preceding claims, wherein said support (110) includes a plurality of elements (111, 112, 114, 115) suitable for taking up relative positions that are different relative to one another.

10. A device (100) according to claim 9, wherein said support (110) comprises a nose (111) and a clamping jaw (112) suitable for clamping a spectacle frame, said clamping jaw (112) being displaceable in translation relative to said nose (111) while being continuously urged towards an initial position relative thereto by resilient return means.

11. A device (100) according to claim 10, wherein said nose (111) is mounted on a slider portion (114) suitable for sliding in a groove (115A) of a strip (115), said nose (111) attached to said slider portion (114) being suitable for being displaced in translation relative to said strip (115) while being continuously urged towards an initial position relative thereto by resilient return means.

12. A device (100) according to claim 11, wherein said nose (111) is pivotally mounted on said slider portion (114).

13. A method of automatically detecting various characteristics of an ophthalmic lens (10) provided with markings, using the device (100) according to any one of claims 1 to 12, the method comprising the following steps:
with the ophthalmic lens placed on said support (110), displacing the support (110) to position said lens in a measurement position;
• using the first illumination means to illuminate said lens;
• using said acquisition and analysis means to pick up a digital file representative of the image of the lens;
• using said acquisition and analysis means to pick up a digital file representative of the positioning image formed by said positioning pointer (113, 113');
• processing the digital files as picked up and deducing therefrom the position of said support and the positions of the markings of the lens in a stationary frame of reference.
